# EUROPÄISCHE PATENTANMELDUNG

(11) **EP 3 461 983 A1**
(43) Veröffentlichungstag der Anmeldung: **03.04.2019**
(21) Anmeldenummer: 18197183.9
(22) Anmeldetag: 27.09.2018
(51) Int. Cl.: E06B 1/70

(54) **FENSTERBANKBEFESTIGUNGSVORRICHTUNG ZUR BEFESTIGUNG EINER FENSTERBANK, FENSTERBANKAUFLAGEVORRICHTUNG ZUR AUFLAGE EINER FENSTERBANK SOWIE FENSTERBANKMONTAGESYSTEM ZUR BEFESTIGUNG EINER FENSTERBANK IN EINER FENSTERLAIBUNG**

(30) Priorität: 27.09.2017 DE 102017122516
(71) Anmelder: Fischer, Klaus, 94072 Bad Füssing (DE); Brummer, Andreas, 94072 Bad Füssing (DE)
(72) Erfinder: Fischer, Klaus, 94072 Bad Füssing (DE); Brummer, Andreas, 94072 Bad Füssing (DE)
(74) Vertreter: Flügel Preissner Schober Seidel

(57) **Zusammenfassung**

Die Erfindung betrifft eine Fensterbankbefestigungsvorrichtung (16) zur Befestigung einer Fensterbank, insbesondere einer Innenfensterbank, in einer Fensterlaibung (12) einer Wand, mit einem Profilleistenelement (26), das in der Fensterlaibung (12) anordenbar und an der Wand und/oder einem in der Fensterlaibung (12) angeordneten Fensterrahmen (22) eines Fensters (24) befestigbar ist, wobei das Profilleistenelement (26) einen Putzabschluss für einen auf die Wand aufzubringenden Putz bildet, wobei das Profilleistenelement (26) einen Aufnahmeschacht (34) zur Aufnahme der Fensterbank und eine Putzabdeckeinrichtung (36) zum Verschließen des Aufnahmeschachtes (34) während der Putzarbeiten aufweist, und wobei die Putzabdeckeinrichtung (36) über eine lösbare Verbindung mit dem Profilleistenelement (26) verbunden ist. Ferner betrifft die Erfindung eine Fensterbankauflagevorrichtung (18) zur Auflage einer Fensterbank, insbesondere einer Innenfensterbank, in einer Fensterlaibung (12) einer Wand sowie ein Fensterbankmontagesystem (10) zur Montage einer Fensterbank, insbesondere eine Innenfensterbank, in einer Fensterlaibung (12) einer Wand.

## Beschreibung

Die vorliegende Erfindung betrifft eine Fensterbankbefestigungsvorrichtung zur Befestigung einer Fensterbank, insbesondere einer Innenfensterbank, in einer Fensterlaibung einer Wand. Ferner betrifft die Erfindung eine Fensterbankauflagevorrichtung zur Auflage einer Fensterbank, insbesondere einer Innenfensterbank, in einer Fensterlaibung einer Wand sowie ein Fensterbankmontagesystem zur Montage einer Fensterbank, insbesondere eine Innenfensterbank, in einer Fensterlaibung einer Wand.

Eine Innenfensterbank dient als oberer Abschluss einer Fensterlaibung, die in einer Wand eingebracht ist. Die Wand kann als Mauerwerk, als Holzständerbauwand oder als Trockenbauwand ausgebildet sein. Ferner dient die Innenfensterbank als Stellfläche für Einrichtungsgegenstände sowie als architektonisches Stilmittel. Innenfensterbänke können aus Holz, Naturstein, Kunststein, Kunststoff oder Beton hergestellt sein.

Eine Innenfensterbank wird zumeist separat zu einem Fenster gefertigt und eingebaut. Hierzu wird die Fensterbank auf das Rohmaß der Fensterlaibung zugeschnitten und in der Fensterlaibung mittels eines Klebers und/oder eines Schaumes befestigt. Im Anschluss daran wird die Wand verputzt und abschließend werden Malerarbeiten durchgeführt. Während der Verputz- und Malerarbeiten kann es zu einer Verschmutzung der Fensterbank kommen, die zumeist nur unter größerem Aufwand entfernt werden kann. Um eine derartige Verschmutzung zu vermeiden, wird die Fensterbank vor den Verputz- und Malerarbeiten mittels einer Folie abgedeckt. Hierzu ist jedoch ein zusätzlicher zeitaufwändiger und damit kostenintensiver Arbeitsschritt erforderlich.

Zur Befestigung einer Außenfensterbank ist es zudem bekannt, Profilleisten zu verwenden, die die Fensterbank zwischen sich aufnehmen und in der Fensterlaibung befestigt werden.

Aus EP 2 500 502 A1 geht ein Bausatz zur Herstellung einer Außenfensterbank im Anschluss an den Fensterstock eines Fensters hervor, das ein wannenartiges Führungselement sowie Befestigungsmittel zur Festlegung des Führungselements am Fensterstock und/oder der Wand aufweist. Zudem weist der Bausatz ein auf die benötigte Länge zuschneidbares Fensterbankelement auf, das nach dem Abschluss der Verputz- und Malerarbeiten in das Führungselement einschiebbar ist.

Ferner offenbart die DE 10 2014 116 327 A1 eine Profilleiste zur Anbringung an den unteren Rahmenschenkel eines Fenster- oder Türrahmens im Bereich des Übergangs zum Mauerwerk für eine Außenfensterbank. Die Profilleiste umfasst einen L-förmigen ersten Leistenabschnitt mit einem am Rahmenschenkel festzulegenden Befestigungsschenkel und einem zu diesem im Wesentlichen rechtwinklig stehenden Lagerschenkel für die Außenfensterbank sowie einen L-förmigen zweiten Leistenabschnitt mit einem Anschlagschenkel, der von der Unterseite des Lagerschenkels absteht und einem Auflageschenkel, wobei der Anschlagschenkel in einem Bereich zwischen der Hinterkante und der Vorderkante der Lagerschenkelunterseite angeordnet ist und mit dem Lagerschenkel und dem Auflageschenkel eine U-förmige Einstecknut für eine die Fensterbank tragende Tragplatte bildet.

Zudem geht aus EP 2 511 465 B1 ein Abschlussprofil zur Montage einer Außenfensterbank, die mit an ihren im Mauerwerk der Fensterlaibung zugewandten Enden als Übergang zur Fensterlaibung vorgesehenen, im Querschnitt im Wesentlichen U- oder C-förmigen, zwischen dem oberen und dem unteren Flansch die Fensterbank aufnehmenden Abschlussprofilen eingebaut wird.

Der Erfindung liegt die Aufgabe zugrunde, eine Fensterbankbefestigungsvorrichtung, eine Fensterbankauflagevorrichtung sowie ein Fensterbankmontagesystem zu schaffen, die eine einfache und verbesserte Montage einer Fensterbank ermöglichen.

Zur Lösung der Aufgabe wird eine Fensterbankbefestigungsvorrichtung mit den Merkmalen des Anspruchs 1, eine Fensterbankauflagevorrichtung mit den Merkmalen des Anspruchs 13 sowie ein Fensterbankmontagesystem mit den Merkmalen des Anspruchs 15 vorgeschlagen.

Vorteilhafte Ausgestaltungen der Fensterbankbefestigungsvorrichtung, der Fensterbankauflagevorrichtung sowie des Fensterbankmontagesystems sind Gegenstand der jeweiligen abhängigen Ansprüche.

Gemäß einem Aspekt der Erfindung wird eine Fensterbankbefestigungsvorrichtung zur Befestigung einer Fensterbank, insbesondere einer Innenfensterbank, in einer Fensterlaibung einer Wand geschaffen, das ein Profilleistenelement aufweist, das in der Fensterlaibung anordenbar und an der Wand und/oder einem in der Fensterlaibung angeordneten Fensterrahmen eines Fensters befestigbar ist, wobei das Profilleistenelement einen Putzabschluss für einen auf die Wand aufzubringenden Putz bildet, wobei das Profilleistenelement einen Aufnahmeschacht zur Aufnahme der Fensterbank und eine Putzabdeckeinrichtung zum Verschließen des Aufnahmeschachtes während der Putzarbeiten aufweist, und wobei die Putzabdeckeinrichtung über eine lösbare Verbindung mit dem Profilleistenelement verbunden ist.

Die erfindungsgemäße Fensterbankbefestigungsvorrichtung ermöglicht eine einfache Montage einer Innenfensterbank nach Abschluss der Verputz- und/oder Malerarbeiten. Hierzu wird die Putzabdeckeinrichtung nach Abschluss der Verputz- und/oder Malerarbeiten entfernt und die Innenfensterbank wird in den Aufnahmeschacht eingesetzt. Da die Putzabdeckeinrichtung integraler Bestandteil der Fensterbankmontagevorrichtung ist, entfallen aufwendige Abdeckarbeiten der Innenfensterbank vor dem Verputzen und/oder Malern. Darüber hinaus entfallen aufwendige Reinigungsarbeiten der Innenfensterbank nach Abschluss der Verputz- und/oder Malerarbeiten. Der Aufnahmeschacht kann vorliegend auch als Einschubschacht bezeichnet werden. Die Wand kann beispielsweise als Mauerwerk, als Holzständerbauwand oder Trockenbauwand ausgebildet sein.

Zur Montage einer Innenfensterbank mittels der erfindungsgemäßen Fensterbankbefestigungsvorrichtung wird zunächst ein Profilleistenelement entsprechend der benötigten Länge bereitgestellt. Anschließend wird das Profilleistenelement in der Fensterlaibung an der Wand und/oder einem Fensterrahmen eines Fensters befestigt. Vorteilhaft wird jeweils ein Profilleistenleistenelement in einer Ecke der Fensterlaibung angeordnet und mit der Wand und/oder dem Fensterrahmen verbunden. Anschließend wird die Wand und die Fensterlaibung verputzt, wobei das Profilleistenelement eingeputzt wird. Vor dem Verputzen kann die Wand isoliert werden, indem beispielsweise Isolierplatten auf die Wand aufgebracht werden. Abschließend werden eventuelle Malerarbeiten durchgeführt. Schließlich wird die Putzabdeckeinrichtung entfernt und die Innenfensterbank wird in den Aufnahmeschacht des Profilleistenelements eingesetzt. Dadurch entfallen aufwendige und kostenintensive Reinigungs- und Ausbesserungsarbeiten sowie aufwendige Abdeckarbeiten der Fensterbank. Zudem verhindert die Putzabdeckeinrichtung ein Eindringen von Putz in den Aufnahmeschacht während der Putzarbeiten. Nach dem Einsetzen der Fensterbank in den Aufnahmeschacht ist es nur noch erforderlich, die zwischen dem Profilleistenelement, der Wand, dem auf die Wand aufgetragenen Putz und/oder dem Fensterrahmen vorhandenen Fugen zu verfugen.

Weiterhin vorteilhaft wird die Fensterbankbefestigungsvorrichtung als kostengünstige Meterware bereitgestellt. Dadurch muss das Profilleistenelement vor der Montage in der Fensterlaibung lediglich auf die benötigte Länge beziehungsweise Tiefe der Fensterlaibung zugeschnitten werden. Dies kann einfach mittels handelsüblicher Werkzeuge, wie beispielsweise einer Kappsäge oder einer Stichsäge, erfolgen.

Darüber hinaus dient das Profilleistenelement als Orientierungshilfe zum Auftragen des Putzes auf die Mauer während der Putzarbeiten. Insbesondere gibt das Profilleistenelement die Dicke des aufzutragenden Putzes vor.

In einer vorteilhaften Ausgestaltung weist das Profilleistenelement einen ersten Schenkel, einen zweiten Schenkel und eine die beiden Schenkel miteinander verbindende Basis auf, die den Aufnahmeschacht bilden. Im eingebauten Zustand liegt das Profilleistenelement mittels seines zweiten Schenkels auf der Wand auf, wobei die Basis an der Wand der Fensterlaibung anliegt. Insbesondere ist der erste Schenkel kürzer als der zweite Schenkel, wobei der ersten Schenkel an seinem freien Ende eine Putzanschlagkante für den auf die Wand aufzubringenden Putz aufweist. Somit dient der erste Schenkel, insbesondere dessen Endkante, als Maß für die Dicke des auf die Wand aufzubringenden Putzes. Vorteilhaft beträgt die Höhe des Aufnahmeschachts, der sich aus dem Abstand der beiden Schenkel ergibt, zwischen ca. 1 mm und ca. 150 mm.

In einer vorteilhaften Ausgestaltung ist das Profilleistenelement aus Metall, insbesondere Aluminium, oder Kunststoff, insbesondere einem faserverstärkten Kunststoff, hergestellt. Dadurch lässt sich das Profilleistenelement als kostengünstige Meterware herstellen.

In einer vorteilhaften Ausgestaltung verläuft die Putzabdeckeinrichtung in Längsrichtung des Aufnahmeschachtes und verschließt eine Aufnahmeöffnung des Aufnahmeschachtes. Dadurch verhindert die Putzabdeckeinrichtung zuverlässig ein Eindringen von Putz in den Aufnahmeschacht während der Putzarbeiten. Die Aufnahmeöffnung ist bevorzugt der Fensterbank zugewandt beziehungsweise kann innerhalb der Fensterlaibung angeordnet sein. Die Längsrichtung des Aufnahmeschachts entspricht der Tiefe der Fensterlaibung.

In einer vorteilhaften Ausgestaltung ist die lösbare Verbindung als wenigstens eine in Längsrichtung des Aufnahmeschachts verlaufende Sollbruchstelle ausgebildet. Dadurch kann die Putzabdeckeinrichtung nach den Putz- und/oder Malerarbeiten einfach entfernt werden. Bevorzugt wird die Putzabdeckeinrichtung entlang der Sollbruchstelle abgebrochen, abgetrennt und/oder weggerissen. Die Putzabdeckeinrichtung kann stoffschlüssig und/oder materialeinheitlich mit dem Profilleistenelement verbunden sein. Hierzu kann die Sollbruchstelle während der Herstellung des Profilleistenelementes ausgebildet werden. Die Sollbruchstelle weist im Vergleich zum Profilleistenelement und/oder der Putzabdeckeinrichtung eine geringere Materialdicke auf. Die in Längsrichtung verlaufende Sollbruchstelle kann an einer dem Aufnahmeschacht zugewandten Innenseite des ersten Schenkels und/oder des zweiten Schenkels, insbesondere an einem freien Ende der Innenseite des ersten Schenkels und/oder des zweiten Schenkels angeordnet sein. Darüber hinaus kann die Putzabdeckeinrichtung über zwei in Längsrichtung des Aufnahmeschachts verlaufende Sollbruchstellen stoffschlüssig mit dem Profilleistenelement verbunden sein, wobei jeweils eine Sollbruchstelle an einer Innenseite des ersten Schenkels und an einer Innenseite des zweiten Schenkels, insbesondere einem freien Ende der Innenseite des ersten Schenkels und einem freien Ende der Innenseite des zweiten Schenkels angeordnet ist. Die Putzabdeckeinrichtung kann auch separat zu dem Profilleistenelement hergestellt sein und anschließend mit dem Profilleistenelement unter Ausbildung einer oder zwei in Längsrichtung des Profilleistenelements verlaufenden Sollbruchstelle(n) verbunden werden. Hierzu kann die Putzabdeckeinrichtung mit dem Profilleistenelement, insbesondere mit dem ersten Schenkel und/oder dem zweiten Schenkel, verklebt, verlötet und/oder verschweißt sein. Die Sollbruchstelle kann als eine durchgehende Schweiß-, Löt- und/oder Klebenaht ausgebildet sein. Ferner kann die Sollbruchstelle aus Schweiß-, Löt- und/oder Klebepunkten gebildet sein.

In einer vorteilhaften Ausgestaltung ist die Putzabdeckeinrichtung eine Leiste, ein Deckel und/oder eine Folie. Ein als Leiste ausgebildete Putzabdeckeinrichtung besteht vorteilhaft aus demselben Material wie das Profilleistenelement. Ferner kann die Leiste aus Metall oder Kunststoff, insbesondere faserverstärktem Kunststoff sein. Eine als Folie ausgebildete Putzabdeckeinrichtung ist vorteilhaft mit dem Profilleistenelement verklebt, verlötet und/oder verschweißt. Eine als Deckel ausgebildete Putzabdeckeinrichtung ist bevorzugt formschlüssig und/oder kraftschlüssig mit dem Profilleistenelement verbunden. Bevorzugt ist eine als Deckel ausgebildete Putzabdeckeinrichtung mittels einer lösbaren Klipsverbindung, einer Nut-Feder-Verbindung und/oder wenigstens eines Zapfens, der in eine dazu korrespondierende Öffnung am Profilleistenelement eingreift, verbunden.

In einer vorteilhaften Ausgestaltung weist die Putzabdeckeinrichtung ein Deckelelement auf, das lösbar mit dem Profilleistenelement verbindbar ist, um eine Einschuböffnung des Aufnahmeschachts zum Einführen der Fensterbank in den Aufnahmeschacht zu verschließen. Das Deckelelement verhindert somit ein Eindringen von Putz in den Aufnahmeschacht über die Einschuböffnung. Vorteilhaft ist das Deckelelement mit einer Stirnseite des Profilelements lösbar verbunden. Das Deckelelement kann mittels einer lösbaren Klipsverbindung mit der Stirnseite des Profilleistenelements verbunden sein. Ferner kann das Deckelelement Vorsprünge aufweisen, die in dazu korrespondierende Öffnungen des Profilleistenelements eingesetzt werden. Dadurch kann das Deckelelement wieder verwendet werden. Zudem kann das Deckelelement über wenigstens eine Sollbruchstelle lösbar mit dem Profilleistenelement verbunden sein. Vorteilhaft ist das Deckelelement derart ausgebildet, dass das Deckelelement die Stirnseite des Profilleistenelements vollständig abdeckt. Das Deckelement kann aus demselben Werkstoff wie das Profilleistenelement sein. Darüber hinaus kann das Deckelelement aus Metall oder Kunststoff sein.

In einer vorteilhaften Ausgestaltung weist die Fensterbankbefestigungsvorrichtung eine Abstandsausgleicheinrichtung zum Ausgleich eines Abstands zwischen der Fensterbank und dem Profilleistenelement auf. Mittels der Abstandsausgleicheinrichtung kann ein zwischen der Fensterbank, insbesondere einer Unterseite der Fensterbank, und dem Profilleistenelement, insbesondere einer Innenseite des zweiten Schenkels, vorhandener Abstand ausgeglichen werden. Vorteilhaft erstreckt sich die Abstandsausgleicheinrichtung in Längsrichtung des Profilleistenelementes. Vorteilhaft ist die Abstandsausgleicheinrichtung innerhalb des Aufnahmeschachts angeordnet.

In einer vorteilhaften Ausgestaltung weist die Abstandsausgleicheinrichtung einen Satz von Abstandsausgleichelementen auf. Über die Abstandsausgleichelemente kann ein Abstand zwischen einer Unterseite der Fensterbank und einer Innenseite des zweiten Schenkels des Profilleistenelementes ausgeglichen werden. Aus dem Satz an Abstandsausgleichelementen werden ein und/oder mehrere Abstandsausgleichelemente ausgewählt, um den vorhandenen Abstand auszugleichen. Bevorzugt sind die Abstandsausgleichelemente als Ausgleichsschienen ausgebildet, die entsprechend der Länge des Profilleistenelements abgelängt werden. Hierzu können die Abstandsausgleichelemente als Meterware ausgebildet sein. Vorteilhaft erstreckt sich das Abstandsausgleichelement in Längsrichtung des Aufnahmeschachts, insbesondere über die gesamte Länge des Aufnahmeschachts.

In einer vorteilhaften Ausgestaltung weist der Satz an Abstandsausgleichelementen eine Mehrzahl an Abstandsausgleichelementen auf, die in ihrer Höhe variieren, wobei jeweils ein Abstandsausgleichelement eine Unterfütterung bildet, und/oder dass der Satz an Abstandsausgleichelementen eine Mehrzahl an gleichen Abstandsausgleichelementen aufweist, die aufeinander stapelbar sind, um eine Unterfütterung zu bilden. Der Fensterbankbefestigungsvorrichtung kann für die Montage ein Satz an in ihrer Höhe variierender Abstandsausgleichelemente beigefügt werden, wobei zum Ausgleich eines Abstandes dasjenige Abstandsausgleichelement aus dem Satz an Abstandsausgleichelementen ausgesucht wird, welches dem Abstand entspricht, der zwischen der Fensterbank, insbesondere einer Unterseite der Fensterbank, und dem zweiten Schenkel, insbesondere einer Innenseite des zweiten Schenkels, vorhanden ist. Bevorzugt variieren die Abstandsausgleichelemente in ihrer Höhe in Zwei-Millimeter-Sprüngen, weiter bevorzugt in Ein-Millimeter-Sprüngen. Zum Ausgleich eines Abstandes mittels des Satzes einer Mehrzahl an gleichen Abstandsausgleichelementen werden so viele Abstandsausgleichelemente übereinander gestapelt, bis der zwischen der Fensterbank, insbesondere einer Unterseite der Fensterbank, und dem zweiten Schenkels, insbesondere einer Innenseite des zweiten Schenkel, vorhandene Abstand ausgeglichen ist. Zum Aufeinanderstapeln der Mehrzahl an gleichen Abstandsausgleichelementen kann jedes der Abstandsausgleichelemente einen Vorsprung und eine Vertiefung aufweisen, so dass der Vorsprung eines Abstandsausgleichelements in die Vertiefung eines anderen Abstandsausgleichelements eingreift. Ferner können die Vorsprünge und Vertiefungen auch in Form einer Schwalbenschwanzführung ausgebildet sein.

In einer vorteilhaften Ausgestaltung weist das Profilleistenelement ein erstes Mittel zur Aufnahme eines Putzträgerelements, ein zweites Mittel zur Aufnahme eines Befestigungselements und/oder ein drittes Mittel zur Aufnahme einer Abstandsausgleicheinrichtung zur Einstellung eines Abstands zwischen der Fensterbank und dem Profilleistenelement auf. Dadurch werden die Montage und Anschlussbedingungen vordefiniert, so dass eine einfache Montage geschaffen wird. Über die Mittel kann ein Putzträgerelement, ein Befestigungselement und/oder eine Abstandsausgleicheinrichtung mit dem Profilleistenelement verbunden werden. Das Mittel kann als eine Öffnung, eine Nut und/oder eine Klipsverbindung ausgebildet sein. Das Putzträgerelement kann ein Unterputzgewebe sein.

In einer vorteilhaften Ausgestaltung sind die Mittel als Einstecknuten ausgebildet. Dadurch kann ein Putzträgerelement, ein Befestigungselement und/oder eine Abstandsausgleicheinrichtung einfach in die Einstecknut eingeschoben werden. Bevorzugt weisen das Putzträgerelement, das Befestigungselement und/oder die Abstandsausgleicheinrichtung eine zu der Einstecknut komplementäre Profilleiste oder ein zu der Einstecknut komplementären Einsteckabschnitt auf. Vorteilhaft verläuft die Einstecknut in Längsrichtung des Profilleistenelementes, insbesondere in Längsrichtung des Aufnahmeschachts. Die Einstecknut kann vorteilhaft im Querschnitt L-förmig, T-förmig oder konkav ausgebildet sein.

In einer vorteilhaften Ausgestaltung weist die Fensterbankbefestigungsvorrichtung wenigstens ein Befestigungselement auf, mittels dem das Profilleistenelement an der Wand und/oder dem Fensterrahmen befestigbar ist.

In einer vorteilhaften Ausgestaltung ist das wenigstens eine Befestigungselement als ein Winkelelement ausgebildet. Vorteilhaft wird ein Winkelabschnitt des Befestigungselements in die Einstecknut eingesteckt, um das Befestigungselement mit dem Profilleistenelement zu verbinden. Bevorzugt kann der in die Einstecknut eingesteckte Winkelabschnitt mit dem Profilleistenelement verschraubt und/oder verklebt sein. Der andere Winkelabschnitt wird an der Wand und/oder dem Fensterrahmen befestigt. Bevorzugt weist das Winkelelement Öffnungen zum Hindurchführen von Befestigungselementen, wie beispielsweise Schrauben, auf, um das Winkelelement mit dem Profilleistenelement, der Wand und/oder Fensterrahmen zu verbinden. Vorteilhaft nehmen die beiden Winkelabschnitte einen Winkel zueinander ein. Da Fensterlaibungen in unterschiedlichen Winkeln vom Fensterelement nach außen verlaufen, kann der Winkel zwischen den beiden Winkelabschnitten eingestellt werden. Hierzu sind die beiden Winkelabschnitte biegbar ausgebildet. Das Befestigungselement kann aus Metall, insbesondere Aluminium, oder Kunststoff, insbesondere einem faserverstärktem Kunststoff, sein.

Gemäß einem weiteren Aspekt betrifft die Erfindung eine Fensterbankauflagevorrichtung zur Auflage einer Fensterbank, insbesondere einer Innenfensterbank, in einer Fensterlaibung einer Wand, aufweisend ein Leistenelement, das auf einem Vorsprung in der Fensterlaibung anordenbar und an der Wand und/oder einem in der Fensterlaibung angeordneten Fensterrahmen befestigbar ist. Die Fensterbankauflagevorrichtung dient als Unterlage für die Fensterbank.

In einer vorteilhaften Ausgestaltung ist das Leistenelement aus Metall, insbesondere Aluminium, oder Kunststoff, insbesondere einem faserverstärkten Kunststoff, hergestellt. Dadurch lässt sich das Leistenelement als kostengünstige Meterware herstellen.

In einer vorteilhaften Ausgestaltung weist die Fensterbankauflagevorrichtung eine Abstandsausgleicheinrichtung zum Ausgleich eines Abstands zwischen der Fensterbank und dem Leistenelement auf. Mittels der Abstandsaugleicheinrichtung kann ein zwischen dem Fensterbrett, insbesondere einer Unterseite der Fensterbank, und dem Leistenelement vorhandener Abstand ausgeglichen werden. Vorteilhaft erstreckt sich die Abstandsausgleicheinrichtung in Längsrichtung des Leistenelementes. Vorteilhaft ist die Abstandsausgleicheinrichtung innerhalb des Aufnahmeschachts angeordnet.

In einer vorteilhaften Ausgestaltung weist die Abstandsausgleicheinrichtung einen Satz von Abstandsausgleichelementen auf. Über die Abstandsausgleichelemente kann ein Abstand zwischen einer Unterseite der Fensterbank und dem Leistenelement ausgeglichen werden. Aus dem Satz an Abstandsausgleichelementen werden ein und/oder mehrere Abstandsausgleichelemente ausgewählt, um den vorhandenen Abstand auszugleichen. Bevorzugt sind die Abstandsausgleichelemente als Ausgleichsschienen ausgebildet, die entsprechend der Länge des Profilleistenelements abgelängt werden. Hierzu können die Ausgleichsschienen als Meterware vorliegen. Vorteilhaft erstreckt sich das Abstandsausgleichelement in Längsrichtung des Aufnahmeschachts, insbesondere über die gesamte Länge des Aufnahmeschachts.

In einer vorteilhaften Ausgestaltung weist der Satz an Abstandsausgleichelementen eine Mehrzahl an Abstandsausgleichelementen auf, die in ihrer Höhe variieren, wobei jeweils ein Abstandsausgleichelement eine Unterfütterung bildet, und/oder dass der Satz an Abstandsausgleichelementen eine Mehrzahl an gleichen Abstandsausgleichelementen aufweist, die aufeinander stapelbar sind, um eine Unterfütterung zu bilden. Der Fensterbankauflagevorrichtung kann für die Montage ein Satz an in ihrer Höhe variierender Abstandsausgleichelemente beigefügt werden, wobei zum Ausgleich eines Abstandes dasjenige Abstandsausgleichelement aus dem Satz an Abstandsausgleichelementen ausgesucht wird, welches dem Abstand entspricht, der zwischen der Fensterbank, insbesondere einer Unterseite der Fensterbank, und dem Leistenelement vorhanden ist. Bevorzugt variieren die Abstandsausgleichelemente in ihrer Höhe in Zwei-Millimeter-Sprüngen, weiter bevorzugt in Ein-Millimeter-Sprüngen. Zum Ausgleich eines Abstandes mittels des Satzes einer Mehrzahl an gleichen Abstandsausgleichelementen werden so viele Abstandsausgleichelemente übereinander gestapelt, bis der zwischen der Fensterbank, insbesondere einer Unterseite der Fensterbank, und dem Profilleistenelement vorhandene Abstand ausgeglichen ist. Zum Aufeinanderstapeln der Mehrzahl an gleichen Abstandsausgleichelementen kann jedes der Abstandsausgleichelemente einen Vorsprung und eine Vertiefung aufweisen, so dass der Vorsprung eines Abstandsausgleichelements in die Vertiefung eines anderen Abstandsausgleichelements eingreift. Ferner können die Vorsprünge und Vertiefungen auch in Form einer Schwalbenschwanzführung ausgebildet sein.

In einer vorteilhaften Ausgestaltung weist das Leistenelement ein viertes Mittel zur Aufnahme eines Befestigungselements und/oder ein fünftes Mittel zur Aufnahme einer Abstandsausgleicheinrichtung zum Ausgleich eines Abstands zwischen der Fensterbank und dem Leistenelement auf.

In einer vorteilhaften Ausgestaltung sind die Mittel als Einstecknuten ausgebildet. Dadurch kann ein Befestigungselement und/oder eine Abstandsausgleicheinrichtung einfach in die Einstecknut eingeschoben werden. Bevorzugt weisen das Befestigungselement und/oder die Abstandsausgleicheinrichtung eine zu der Einstecknut komplementäre Profilleiste oder einen zu der Einstecknut komplementären Einsteckabschnitt auf. Vorteilhaft verläuft die Einstecknut in Längsrichtung des Profilleistenelementes, insbesondere in Längsrichtung des Aufnahmeschachts. Die Einstecknut kann vorteilhaft im Querschnitt L-förmig, T-förmig oder konkav ausgebildet sein.

In einer vorteilhaften Ausgestaltung weist die Fensterbankauflagevorrichtung wenigstens ein Befestigungselement auf, mittels dem das Leistenelement an der Wand und/oder dem Fensterrahmen befestigbar ist.

In einer vorteilhaften Ausgestaltung ist das wenigstens eine Befestigungselement als ein Winkelelement ausgebildet. Vorteilhaft wird ein Winkelabschnitt des Befestigungselements in die Einstecknut eingesteckt, um das Befestigungselement mit dem Leistenelement zu verbinden. Bevorzugt kann der in die Einstecknut eingesteckte Winkelabschnitt mit dem Leistenelement verschraubt und/oder verklebt sein. Der andere Winkelabschnitt wird an der Wand und/oder dem Fensterrahmen befestigt. Bevorzugt weist das Winkelelement Öffnungen zum Hindurchführen von Befestigungselementen, wie beispielsweise Schrauben, auf, um das Winkelelement mit dem Profilleistenelement, der Wand und/oder dem Fensterrahmen zu verbinden. Vorteilhaft nehmen die beiden Winkelabschnitte einen Winkel zueinander ein. Da Fensterlaibungen in unterschiedlichen Winkeln vom Fensterelement nach außen verlaufen, kann der Winkel zwischen den beiden Winkelabschnitten eingestellt werden. Hierzu sind die beiden Winkelabschnitte biegbar ausgebildet. Das Befestigungselement kann aus Metall, insbesondere Aluminium, oder Kunststoff, insbesondere einem faserverstärktem Kunststoff sein.

Ferner betrifft die Erfindung ein Fensterbankmontagesystem zur Befestigung einer Fensterbank, insbesondere einer Innenfensterbank, in einer Fensterlaibung einer Wand, mit wenigstens zwei erfindungsgemäßen Fensterbankbefestigungsvorrichtungen.

In einer vorteilhaften Ausgestaltung weist das Fensterbankmontagesystem wenigstens eine erfindungsmäße Fensterbankauflageeinrichtung auf.

Im Folgenden werden die Fensterbankbefestigungsvorrichtung, die Fensterbankauflagevorrichtung, das Fensterbankmontagesystem sowie weitere Merkmale und Vorteile anhand von Ausführungsbeispielen näher erläutert, die in den Figuren schematisch dargestellt sind. Hierbei zeigt:
- Figur 1: eine perspektivische Darstellung eines Fensterbankmontagesystems, das in einer Fensterlaibung eines Mauerwerks angeordnet und an einem Mauerwerk und einem Fensterrahmen befestigt ist;
- Figur 2: ein Fensterbankmontagesystem mit einer Fensterbankbefestigungsvorrichtung gemäß einer ersten Ausführungsform, einer Fensterbankauflagevorrichtung gemäß einer ersten Ausführungsform und Abstandsausgleichelementen gemäß einer ersten Ausführungsform;
- Figur 3: eine vergrößerte Darstellung eines Schnitts durch die Fensterbankbefestigungsvorrichtung entlang der Linie III-III in Figur 2;
- Figur 4: eine vergrößerte Darstellung eines Schnitts durch die Fensterbankauflagevorrichtung entlang der Linie IV-IV in Figur 2;
- Figur 5: eine vergrößerte Darstellung eines Schnitts durch das Abstandshaltelement entlang der Linie V-V in Figur 2;
- Figur 6: einen vergrößerte Darstellung eines Schnitts durch das Abstandsausgleichelement entlang der Linie VI-VI in Figur 2;
- Figur 7: eine vergrößerte Darstellung eines Querschnitts durch eine Fensterbankbefestigungsvorrichtung gemäß einer zweiten Ausführungsform;
- Figur 8: eine vergrößerte Darstellung eines Querschnitts durch eine Fensterbankauflagevorrichtung gemäß einer zweiten Ausführungsform;
- Figur 9: eine vergrößerte Darstellung eines Querschnitts durch ein Abstandsausgleichelement gemäß einer zweiten Ausführungsform;
- Figur 10: eine vergrößerte Darstellung eines Querschnitts durch eine Fensterbankbefestigungsvorrichtung gemäß einer dritten Ausführungsform;
- Figur 11: eine vergrößerte Darstellung eines Querschnitts durch eine Fensterbankauflagevorrichtung gemäß einer dritten Ausführungsform;
- Figur 12: eine vergrößerte Darstellung eines Querschnitts durch ein Abstandsausgleichelement gemäß einer dritten Ausführungsform.

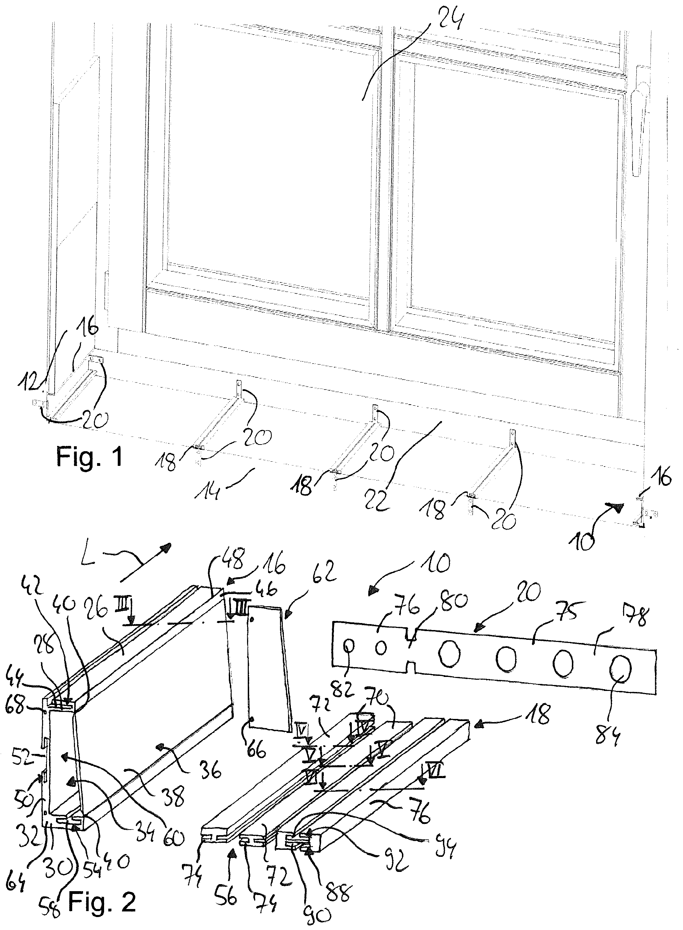

In Figur 1 ist ein Fensterbankmontagesystem 10 gezeigt, das zur Befestigung einer nicht dargestellten Fensterbank, insbesondere eine Innenfensterbank, in einer Fensterlaibung 12 einer Wand dient. Die Wand ist vorliegend als ein Mauerwerk 14 ausgebildet.

Das Fensterbankmontagesystem 10 weist vorliegend zwei Fensterbankbefestigungsvorrichtungen 16 und drei Fensterbankauflagevorrichtungen 18 auf. Die Fensterbankbefestigungsvorrichtungen 16 und die Fensterbankauflagevorrichtungen 18 sind mittels Befestigungselementen 20 an dem Mauerwerk 14 und an einem in der Fensterlaibung 12 angeordneten und mit dem Mauerwerk 14 befestigten Fensterrahmen 22 eines Fensters 24 befestigt.

Wie in Figur 2 ersichtlich ist, weist die Fensterbankbefestigungsvorrichtung 16 ein Profilleistenelement 26 auf, das aus Metall, insbesondere Aluminium, oder Kunststoff, insbesondere faserverstärktem Kunststoff, hergestellt ist. Dadurch lässt sich das Profilleistenelement 26 als kostengünstige Meterware herstellen, so dass das Profilleistenelement 26 lediglich auf die benötigte Länge abgelängt werden muss. Hierzu kann ein handelsübliches Werkzeug, wie beispielsweise eine Kappsäge oder eine Stichsäge, verwendet werden.

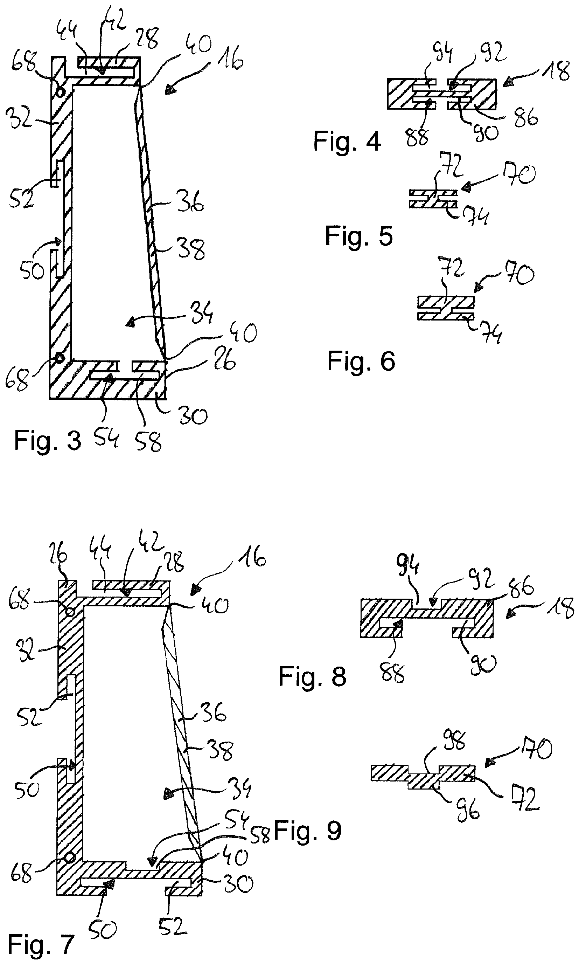

Das Profilleistenelement 26 weist gemäß den Figuren 2 und 3 einen ersten Schenkel 28, einen zweiten Schenkel 30 und eine die beiden Schenkel 28, 30 miteinander verbindende Basis 32 auf. Die beiden Schenkel 28, 30 ragen rechtwinklig von der Basis 32 ab und begrenzen zusammen mit der Basis 32 einen Aufnahmeschacht 34 zur Aufnahme einer nicht dargestellten Fensterbank, insbesondere einer Innenfensterbank.

Der zweite Schenkel 30 ist länger als der erste Schenkel 28 ausgebildet. Vorliegend stützt sich das Profilleistenelement 26 im eingebauten Zustand über den zweiten Schenkel 30 auf dem Mauerwerk 14 ab und liegt mit der Basis 32 an dem Mauerwerk 14 an, wie in Figur 1 ersichtlich ist. Das Profilleistenelement 26 muss sich jedoch nicht auf dem Mauerwerk 14 abstützen, sondern kann über das Befestigungselement 20 mit der Fensterlaibung 12 und/oder dem Mauerwerk 14 verbunden sein.

Das Profilleistenelement 26 weist zudem eine Putzabdeckeinrichtung 36 auf, die den Aufnahmeschacht 34, insbesondere eine Aufnahmeöffnung zur Aufnahme der Fensterbank, verschließt. Die Putzabdeckeinrichtung 36 verhindert ein Eindringen von Putz in den Aufnahmeschacht 34 während des Verputzens des Mauerwerks 14 und der Fensterlaibung 12.

Die Putzabdeckeinrichtung 36 ist vorliegend als eine Leiste 38 ausgebildet und lösbar mit den beiden Schenkeln 28, 30 verbunden. Hierzu ist die Leiste 38 über zwei in Längsrichtung L des Aufnahmeschachts 34 verlaufende Sollbruchstellen 40 stoffschlüssig mit den beiden Schenkeln 28, 30 verbunden. Die Sollbruchstellen 40 sind als Materialverjüngungen ausgebildet. Dadurch kann die Leiste 38 einfach von dem Profilleistenelement 26 entfernt werden, indem die Sollbruchstellen 40 aufgebrochen werden.

Die Leiste 38 kann stoffschlüssig und materialeinheitlich mit dem Profilleistenelement 26 verbunden sein. Darüber hinaus kann die Leiste 38 separat zu dem Profilleistenelement 26 hergestellt und anschließend stoffschlüssig mittels Kleben, Löten und/oder Schweißen mit den Schenkeln 28, 30 verbunden werden.

Wie in den Figuren 2 und 3 ersichtlich ist, weist der erste Schenkel 28 ein erstes Mittel 42 zur Aufnahme eines nicht dargestellten Putzträgerelements auf, das als Anschluss für das Profilleistenelement 26 an das Mauerwerk 14 dient. Das erste Mittel 42 ist als eine erste Einstecknut 44 ausgebildet, die im Querschnitt L-förmig ist. Das Putzträgerelement ist bevorzugt als Unterputzgewebe ausgebildet und weist eine Profilleiste auf, die komplementär zu der Einstecknut 44 ausgebildet ist.

Ferner weist der erste Schenkel 28 an seinem den Aufnahmeschacht 34 abgewandten freien Ende 46 eine Putzkante 48 auf, die einen Abschluss für den auf das Mauerwerk 14 und die Fensterlaibung 12 aufzubringenden Putz bildet.

Die Basis 32 weist auf einer dem Mauerwerk 14 zugewandten Seite ein zweites Mittel 50 zur Aufnahme der Befestigungselemente 20 auf. Das zweite Mittel 50 ist als eine zweite Einstecknut 52 ausgebildet, die im Querschnitt näherungsweise T-förmig ist.

Der zweite Schenkel 30 weist auf einer dem Aufnahmeschacht 34 zugewandten Innenseite ein drittes Mittel 54 zur Aufnahme einer Abstandsausgleicheinrichtung 96 zum Ausgleich eines Abstands zwischen der nicht dargestellten Fensterbank und der Innenseite des zweiten Schenkels 30 auf. Das dritte Mittel 54 ist als eine dritte Einstecknut 58 ausgebildet und ist im Querschnitt näherungsweise T-förmig ausgebildet.

Zum Verschließen einer Einschuböffnung 60 des Aufnahmeschachts 34, das zum Einführen einer nicht dargestellten Innenfensterbank in den Aufnahmeschacht 34 dient, weist die Fensterbankbefestigungsvorrichtung 16 ein Deckelelement 62 auf, das lösbar mit einer Stirnseite 64 des Profilleistenelements 26 verbunden ist.

Wie in Figur 2 ersichtlich ist, weist das Deckelelement 62 zwei Zapfen 66 auf, die in korrespondierende Durchgänge 68 der Basis 32 einsetzbar sind, um das Deckelelement 62 lösbar mit dem Profilleistenelement 26 zu verbinden und die Einschuböffnung 60 zu verschließen.

In Figur 2 ist die Abstandsausgleicheinrichtung 56 gezeigt, die einen Satz an Abstandsausgleichelementen 70 aufweist. Vorliegend sind nur zwei Abstandsausgleichelemente aus dem Satz an Abstandsausgleichelementen 70 gezeigt. Die Abstandsausgleichelemente 70 können aus Metall, insbesondere Aluminium, oder Kunststoff, insbesondere einem faserverstärktem Kunststoff, sein. Dadurch lassen sich die Abstandsausgleichelemente 70 als kostengünstige Meterware herstellen, so dass die Abstandsausgleichelemente 70 lediglich auf die benötigte Länge abgelängt werden müssen. Hierzu kann ein handelsübliches Werkzeug, wie beispielsweise eine Kappsäge oder eine Stichsäge, verwendet werden.

Wie in den Figuren 2, 5 und 6 ersichtlich ist, variieren die Abstandsausgleichelemente 70 in ihrer Höhe, so dass ein Abstand zwischen der nicht dargestellten Innenfensterbank und der Innenseite des zweiten Schenkels 30 ausgeglichen werden kann. Vorteilhaft variieren die Abstandsausgleichelemente 70 in ihrer Höhe in Zwei-Millimeter-Sprüngen, weiter bevorzugt in Ein-Millimeter-Sprüngen.

Die Abstandsausgleichelemente 70 sind als Profilschienen 72 ausgebildet, wobei jedes der Abstandsausgleichelemente 70 eine Einsteckeinrichtung 74 aufweist, die an die Kontur der dritten Einstecknut 58 angepasst ist, so dass das Abstandsausgleichelement 70 über seine Einsteckeinrichtung 74 in die dritte Einstecknut 58 eingeschoben werden kann.

Das Befestigungselement 20 ist als ein Winkelelement 75 ausgebildet, wie in Figur 1 ersichtlich ist. In Figur 2 ist das Befestigungselement 20 in einer Ebene dargestellt. Das Befestigungselement 20 weist einen ersten Winkelabschnitt 76 und einen zweiten Winkelabschnitt 78 auf, die über einen Verbindungsabschnitt 80 miteinander verbunden sind. Der erste Winkelabschnitt 76 ist kürzer als der zweite Winkelabschnitt 78 ausgebildet. Beide Winkelabschnitte 76, 78 nehmen einen Winkel zueinander ein.

Der erste Winkelabschnitt 76 wird in die zweite Einstecknut 52 eingesetzt. Um das Befestigungselement 20 mit dem Profilleistenelement 26 zu verbinden, weist der erste Winkelabschnitt 76 erste Öffnungen 82 auf, in die nicht dargestellte Befestigungselemente, wie beispielsweise Schrauben, eingesetzt werden können, um das Befestigungselement 20 mit dem Profilleistenelement 26 zu verbinden.

Der zweite Winkelabschnitt 78 wird mit dem Mauerwerk 14 und/oder dem Fensterrahmen 22 verbunden. Hierzu weist der zweite Winkelabschnitt 78 zweite Öffnungen 84 auf, durch die nicht dargestellte Befestigungselemente, wie beispielsweise Schrauben, hindurchgeführt und mit dem Mauerwerk 14 und/oder dem Fensterrahmen 22 verbunden werden können.

Die Fensterbankauflagevorrichtungen 18 dienen zur Unterlage für eine nicht dargestellte Fensterbank in der Fensterlaibung 12. Die Fensterbankauflagevorrichtung 18 weist ein Leistenelement 86 auf, das auf dem Mauerwerk 14 aufliegt. Das Leistenelement 86 kann aus Metall, insbesondere Aluminium, oder Kunststoff, insbesondere faserverstärktem Kunststoff, hergestellt sein. Dadurch lässt sich die Fensterbankauflagevorrichtung 18 als kostengünstige Meterware herstellen, so dass das Leistenelement 86 nur auf die benötigte Länge abgelängt werden muss. Hierzu kann ein handelsübliches Werkzeug, wie beispielsweise eine Kappsäge oder eine Stichsäge, verwendet werden.

Wie in den Figuren 2 und 4 ersichtlich ist, weist das Leistenelement 86 ein viertes Mittel 88 zur Aufnahme der Befestigungselemente 20 auf. Das vierte Mittel 88 ist als eine vierte Einstecknut 90 ausgebildet, wobei die vierte Einstecknut 90 im Querschnitt näherungsweise T-förmig ausgebildet ist, so dass der erste Winkelabschnitt 56 in die vierte Einstecknut 90 eingesetzt werden kann, wie zuvor beschrieben.

Das Leistenelement 86 weist ferner ein fünftes Mittel 92 zur Aufnahme der Abstandsausgleicheinrichtung 56 zum Ausgleich eines Abstands zwischen der nicht dargestellten Fensterbank und dem Leistenelement 86 auf. Das fünfte Mittel 92 ist als eine fünfte Einstecknut 94 ausgebildet und ist im Querschnitt näherungsweise T-förmig. In die fünfte Einstecknut 94 kann ein Abstandsausgleichelement 70 über seine Einsteckeinrichtung 74 eingeschoben werden kann.

Im Folgenden wird ein mögliches Verfahren zur Befestigung einer nicht dargestellten Fensterbank, insbesondere einer Innenfensterbank, mittels des Fensterbankmontagesystems 10 beschrieben. Zunächst werden zwei Profilleistenelemente 26 auf die benötigte Länge zugeschnitten. Im Anschluss daran wird jeweils endseitig in die zweite Einstecknut 52 eines jeden Profilleistenelements 26 jeweils ein Befestigungselement 20 eingeschoben. Anschließend wird jedes Profilleistenelement 26 in den Ecken der Fensterlaibung 12 platziert und mittels Befestigungselementen, wie beispielsweise Schrauben, über die zweiten Öffnungen 84 mit dem Mauerwerk 14 und/oder dem Fensterrahmen 22 verbunden. Anschließend werden die Einschuböffnungen 60 mit jeweils einem Deckelelement 62 verschlossen.

Im Anschluss daran werden die Leistenelemente 86 entsprechend der benötigten Länge zugeschnitten. Schließlich wird jeweils endseitig in die vierte Einstecknut 90 jeweils ein Befestigungselement 20 eingesetzt. Danach werden die Leistenelemente 86 auf dem Mauerwerk 14 platziert und mittels Befestigungselementen, wie beispielsweise Schrauben, welche über die zweiten Öffnungen 84 mit dem Mauerwerk 14 und/oder dem Fensterrahmen 22 verbunden werden, befestigt.

Nachdem die Profilleistenelemente 26 und die Leistenelemente 86 befestigt sind und die Einschuböffnungen 60 mittels der Deckelelemente 62 verschlossen sind, wird in jede erste Einstecknut 44 jeweils ein auf die benötigte Länge zugeschnittenes Putzträgerelement eingeschoben. Anschließend wird das Mauerwerk verputzt, wobei die Putzkanten 48 als Abschluss für den auf das Mauerwerk aufzubringenden Putz dienen.

Nach dem Verputzen und eventuellen Malerarbeiten werden die Deckelelemente 62 sowie die Leisten 38 entfernt. Insbesondere werden die Leisten 38 an den Sollbruchstellen 40 von dem Profilleistenelement 26 abgetrennt. Danach wird die Innenfensterbank auf die benötigte Länge zugeschnitten und über die Einschuböffnung 60 in die Aufnahmeschächte 34 eingesetzt. Zum Ausgleich eines zwischen der Unterseite der Innenfensterbank und den zweiten Schenkeln 30 beziehungsweise den Leistenelementen 86 vorhandenen Abstands werden Abstandsausgleichelemente 70, deren Höhe dem Abstand entspricht, zugeschnitten und in die dritten und fünften Einstecknuten 58, 94 eingeschoben. Zum Schluss werden die zwischen dem Profilleistenelement 26, dem aufgetragenen Putz und/oder dem Fensterrahmen 22 vorhandenen Fugen verfugt.

Nachfolgend werden weitere Ausführungsformen der Fensterbankbefestigungsvorrichtung 16, der Fensterbankauflagevorrichtung 18 und der Abstandsausgleicheinrichtung 56 beschrieben, wobei für gleiche oder funktionsgleiche Teile dieselben Bezugszeichen verwendet werden.

In den Figuren 7 bis 9 ist eine zweite Ausführungsform der Fensterbankbefestigungsvorrichtung 16, der Fensterbankauflagevorrichtung 18 und der Abstandsausgleicheinrichtung 56 gezeigt, die sich von der ersten Ausführungsform in der Ausgestaltung der Abstandsausgleicheinrichtung 56, der dritten Einstecknut 58 und der vierten Einstecknut 90 unterscheidet.

Die Abstandsausgleicheinrichtung 56 weist vorliegend einen Satz an Abstandsausgleichelementen 70, die eine Mehrzahl an gleichen Abstandsausgleichelementen 70 umfassen. Die gleichen Abstandsausgleichelemente 70 sind aufeinander stapelbar, um eine Unterfütterung zu bilden. Hierzu weist jedes Abstandsausgleichelement 70 einen rechteckförmigen Vorsprung 96 und eine dazukorrespondierende rechteckförmige Vertiefung 98 auf, so dass beim Aufeinanderstapeln der Vorsprung 96 eines Abstandsausgleichelementes 70 in einer Vertiefung 98 eines anderen Abstandsausgleichelementes 70 einliegt

Zur Aufnahme der Abstandsausgleichelemente 70, insbesondere eines Vorsprungs 96, sind die dritte Einstecknut 58 und die fünfte Einstecknut 94 im Querschnitt rechteckförmig ausgebildet.

Ferner weist der zweite Schenkel 30 auf einer Unterseite eine zweite Einstecknut 52 zum Einsetzen von Befestigungsmitteln 20 auf.

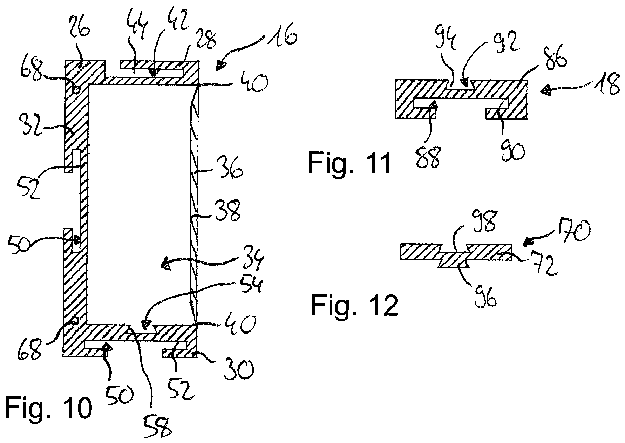

In den Figuren 10 bis 12 ist eine dritte Ausführungsform der Fensterbankbefestigungsvorrichtung 16, der Fensterbankauflagevorrichtung 18 und der Abstandsausgleicheinrichtung 56 gezeigt, die sich von der zweiten Ausführungsform in der Ausgestaltung der Vorsprünge 96 und der Vertiefungen 98 unterscheidet.

Die Vorsprünge 96 und die Vertiefungen 98 sind im Querschnitt konusförmig ausgebildet, so dass eine Schwalbenschwanzführung gebildet wird.

### Bezugszeichenliste

- 10: Fensterbankmontagesystem
- 12: Fensterlaibung
- 14: Mauerwerk
- 16: Fensterbankbefestigungsvorrichtung
- 18: Fensterbankauflagevorrichtung
- 20: Befestigungselement
- 22: Fensterrahmen
- 24: Fenster
- 26: Profilleistenelement
- 28: erster Schenkel
- 30: zweiter Schenkel
- 32: Basis
- 34: Aufnahmeschacht
- 36: Putzabdeckeinrichtung
- 38: Leiste
- 40: Sollbruchstelle
- 42: erstes Mittel
- 44: erste Einstecknut
- 46: freies Ende
- 48: Putzkante
- 50: zweites Mittel
- 52: zweite Einstecknut
- 54: drittes Mittel
- 56: Abstandsausgleicheinrichtung
- 58: dritte Einstecknut
- 60: Einschuböffnung
- 62: Deckelelement
- 64: Stirnseite
- 66: Zapfen
- 68: Durchgang
- 70: Abstandsausgleichelement
- 72: Profilschiene
- 74: Einsteckeinrichtung
- 75: Winkelelement
- 76: erster Winkelabschnitt
- 78: zweiter Winkelabschnitt
- 80: Verbindungsabschnitt
- 82: erste Öffnung
- 84: zweite Öffnung
- 86: Leistenelement
- 88: viertes Mittel
- 90: vierte Einstecknut
- 92: fünftes Mittel
- 94: fünfte Einstecknut
- 96: Vorsprung
- 98: Vertiefung

- L: Längsrichtung

## Patentansprüche

1. Fensterbankbefestigungsvorrichtung (16) zur Befestigung einer Fensterbank, insbesondere einer Innenfensterbank, in einer Fensterlaibung (12) einer Wand, mit einem Profilleistenelement (26), das in der Fensterlaibung (12) anordenbar und an der Wand und/oder einem in der Fensterlaibung (12) angeordneten Fensterrahmen (22) eines Fensters (24) befestigbar ist, wobei das Profilleistenelement (26) einen Putzabschluss für einen auf die Wand aufzubringenden Putz bildet, wobei das Profilleistenelement (26) einen Aufnahmeschacht (34) zur Aufnahme der Fensterbank und eine Putzabdeckeinrichtung (36) zum Verschließen des Aufnahmeschachtes (34) während der Putzarbeiten aufweist, und wobei die Putzabdeckeinrichtung (36) über eine lösbare Verbindung mit dem Profilleistenelement (26) verbunden ist.

2. Fensterbankbefestigungsvorrichtung (16) nach Anspruch 1, **dadurch gekennzeichnet, dass** die Putzabdeckeinrichtung (36) in Längsrichtung (L) des Aufnahmeschachts (34) verläuft und eine Aufnahmeöffnung des Aufnahmeschachtes (34) verschließt.

3. Fensterbankbefestigungsvorrichtung (16) nach Anspruch 1 oder 2, **dadurch gekennzeichnet, dass** die lösbare Verbindung als wenigstens eine in Längsrichtung (L) des Aufnahmeschachts (34) verlaufende Sollbruchstelle (40) ausgebildet ist.

4. Fensterbankbefestigungsvorrichtung (16) nach einem der vorhergehenden Ansprüche, **dadurch gekennzeichnet, dass** die Putzabdeckeinrichtung (36) eine Leiste (38), einen Deckel und/oder eine Folie ist.

5. Fensterbankbefestigungsvorrichtung (16) nach einem der vorhergehenden Ansprüche, **dadurch gekennzeichnet, dass** die Putzabdeckeinrichtung (36) ein Deckelelement (62) aufweist, das lösbar mit dem Profilleistenelement (26) verbindbar ist, um eine Einschuböffnung des Aufnahmeschachts (34) zum Einführen der Fensterbank in den Aufnahmeschacht (34) zu verschließen.

6. Fensterbankbefestigungsvorrichtung (16) nach einem der vorhergehenden Ansprüche, **gekennzeichnet durch** eine Abstandsausgleicheinrichtung (56) zum Ausgleich eines Abstandes zwischen der Fensterbank und dem Profilleistenelement (26).

7. Fensterbankbefestigungsvorrichtung (16) nach Anspruch 6, **dadurch gekennzeichnet, dass** die Abstandsausgleicheinrichtung (56) einen Satz von Abstandsausgleichelementen (70) aufweist.

8. Fensterbankbefestigungsvorrichtung (16) nach Anspruch 7, **dadurch gekennzeichnet, dass** der Satz an Abstandsausgleichelementen (70) eine Mehrzahl an Abstandsausgleichelementen (70) aufweist, die in ihrer Höhe variieren, wobei jeweils ein Abstandsausgleichelement (70) eine Unterfütterung bildet, und/oder dass der Satz an Abstandsausgleichelementen (70) eine Mehrzahl an gleichen Abstandsausgleichelementen (70) aufweist, die aufeinander stapelbar sind, um eine Unterfütterung zu bilden.

9. Fensterbankbefestigungsvorrichtung (16) nach einem der vorhergehenden Ansprüche, **dadurch gekennzeichnet, dass** das Profilleistenelement (26) ein erstes Mittel (42) zur Aufnahme eines Putzträgerelementes, ein zweites Mittel (50) zur Aufnahme eines Befestigungselementes (20) und/oder ein drittes Mittel (54) zur Aufnahme einer Abstandsausgleicheinrichtung (56) zur Einstellung eines Abstandes zwischen der Fensterbank und dem Profilleistenelement (26) aufweist.

10. Fensterbankbefestigungsvorrichtung (16) nach Anspruch 9, **dadurch gekennzeichnet, dass** die Mittel (42, 50, 54, 88, 92) als Einstecknuten (44, 52, 58, 90) ausgebildet sind.

11. Fensterbankbefestigungsvorrichtung (16) nach einem der vorhergehenden Ansprüche, **gekennzeichnet durch** wenigstens ein Befestigungselement (20) mittels dem das Profilleistenelement (26) an der Wand und/oder dem Fensterrahmen (22) befestigbar ist.

12. Fensterbankbefestigungsvorrichtung (16) nach Anspruch 11, **dadurch gekennzeichnet, dass** das wenigstens eine Befestigungselement (20) als ein Winkelelement (75) ausgebildet ist.

13. Fensterbankauflagevorrichtung (16) zur Auflage einer Fensterbank, insbesondere einer Innenfensterbank, in einer Fensterlaibung (12) einer Wand, aufweisend ein Leistenelement (86), das auf einem Vorsprung der Wand in der Fensterlaibung (12) anordenbar und an der Wand und/oder einem in der Fensterlaibung (12) angeordneten Fensterrahmen (22) befestigbar ist.

14. Fensterbankauflagevorrichtung (16) nach Anspruch 13, **dadurch gekennzeichnet, dass** das Leistenelement (86) ein viertes Mittel (88) zur Aufnahme eines Befestigungselementes (20) und/oder ein fünftes Mittel (94) zur Aufnahme einer Abstandsausgleicheinrichtung (56) zur Einstellung eines Abstandes zwischen der Fensterbank und dem Leistenelement (75) aufweist.

15. Fensterbankmontagesystem (16) zur Montage einer Fensterbank, insbesondere einer Innenfensterbank, in einer Fensterlaibung (12) einer Wand, aufweisend zwei Fensterbankbefestigungsvorrichtungen (16) nach einem der Ansprüche 1 bis 12.

16. Fensterbankmontagesystem (16) nach Anspruch 15, **gekennzeichnet durch** wenigstens eine Fensterbankauflageeinrichtung (18) nach einem der Ansprüche 13 oder 14.
